# EUROPÄISCHE PATENTANMELDUNG

(11) **EP 3 358 690 A1**
(43) Veröffentlichungstag der Anmeldung: **08.08.2018**
(21) Anmeldenummer: 18154977.5
(22) Anmeldetag: 02.02.2018
(51) Int. Cl.: H02G 15/107, H02G 15/184, H02G 15/115

(54) **VERBINDUNGSMUFFE**

(30) Priorität: 07.02.2017 DE 102017102370
(71) Anmelder: NKT GmbH & Co. KG, 51061 Köln (DE)
(72) Erfinder: Amerpohl, Uwe, 51467 Bergisch Gladbach (DE); Behle Mathias, 50733 Köln (DE)
(74) Vertreter: Feder Walter Ebert

(57) **Zusammenfassung**

Die vorliegende Erfindung betrifft eine Verbindungsmuffe (3) zur Verbindung von Kabelenden (4), insbesondere von Gleichspannungskabeln (17), mit einem Verbindungskörper (5), der Steuereinlagen (6) zur Steuerung des elektrischen Feldes und zwei jeweils an ein auf ein Kabelende (4) aufbringbares Kabelsteckteil (7) angepasste Steckbereiche (8) zur Aufnahme der Kabelsteckteile (7) aufweist. Die Erfindung betrifft ferner eine Verbindungsgarnitur (2) und ein Kabelsystem (1) sowie ein Verfahren zum Verbinden von zwei, einen unterschiedlichen Durchmesser aufweisenden Kabelenden (4), insbesondere von zwei Gleichspannungskabeln (17), mit einer Verbindungsmuffe (3).

## Beschreibung

Die vorliegende Erfindung betrifft eine Verbindungsmuffe zur Verbindung von Kabelenden, insbesondere von Gleichspannungskabeln. Die Erfindung betrifft ferner eine Verbindungsgarnitur mit einer Verbindungsmuffe sowie ein Kabelsystem, insbesondere für Hochspannungsgleichspannungsanwendungen und ein Verfahren zum Verbinden von zwei Kabelenden.

Verbindungsmuffen im Bereich der elektrischen Energietechnik sind bereits seit vielen Jahren aus dem Stand der Technik bekannt. Derartige Verbindungsmuffen dienen dabei insbesondere der elektrischen und mechanischen Verbindung zweier Kabelenden. Hierbei stellen die Verbindungsmuffen auch Isolations- und Schutzelemente dar. Die Verbindungsmuffen können fest mit den Kabeln verbunden werden und die elektrische Trennstelle umschließen. Zur Verbindung der Kabelenden werden bei bekannten Verbindungsmuffen die Adern der Kabel entsprechend vorbereitet, in die Verbindungsmuffe eingeschoben und dann gegebenenfalls dort fixiert.

Um das elektrische Feld innerhalb der Verbindungsmuffe entsprechend steuern zu können, sind beispielsweise Verbindungsmuffen bekannt, bei welchen eine Hochspannungselektrode im Inneren der Verbindungsmuffe angeordnet ist. Diese beispielsweise als Feld- oder Schirmelektroden bezeichneten Hochspannungselektroden haben sich zwar, insbesondere bei Wechselspannungsanwendungen, in der Vergangenheit durchaus bewährt. Bei Gleichspannungsmuffen müssen jedoch die besonderen Anforderungen der Gleichstromtechnik berücksichtigt werden. So stellen beispielsweise transiente Vorgänge, etwa bei Einschaltvorgängen oder bei Spannungsimpulsen, Herausforderungen dar. Die elektrischen Eigenschaften von Kabelmuffen der Wechselspannungstechnik haben sich zum Teil für Hochspannungsgleichspannungsanwendungen als nicht ausreichend erwiesen. Zudem können mit bekannten Muffen nur bedingt Kabel mit unterschiedlichem Durchmesser verbunden werden.

Vor diesem Hintergrund stellt sich die **Aufgabe**, eine Verbindungsmuffe, insbesondere für Hochspannungsgleichspannungsanwendungen, anzugeben, welche verbesserte elektrische Eigenschaften aufweist.

Bei einer Verbindungsmuffe der eingangs genannten Art wird die Aufgabe durch einen Verbindungskörper **gelöst**, der Steuereinlagen zur Steuerung des elektrischen Feldes und zwei jeweils an ein auf ein Kabelende aufbringbares Kabelsteckteil angepasste Steckbereiche zur Aufnahme der Kabelsteckteile aufweist.

Auf diese Weise kann eine Verbindungsmuffe angegeben werden, mit welcher die elektrischen Eigenschaften, aber auch die Montage vereinfacht werden kann. Durch einen Verbindungskörper, welcher Steuereinlagen zur Steuerung des elektrischen Feldes aufweist, kann die Potentialverteilung in dem Verbindungskörper vorgegeben werden. Mit Hilfe der Steuereinlagen kann das elektrische Feld über den gesamten Verlauf in radialer Richtung des Verbindungskörpers und an den Grenzflächen zum Kabelsteckteil eingestellt werden. Nachteile einer rein geometrischen Feldsteuerung im Bereich der Hochspannungselektroden, insbesondere bei Gleichspannungsanwendungen, können auf diese Weise vermieden werden. Darüber hinaus können durch das Vorsehen von an Kabelsteckteile angepassten Steckbereichen die Montage und insbesondere die Montagezeit gegenüber bekannten Lösungen verbessert werden. Mit Hilfe der Steckbereiche in dem Verbindungskörper kann ein Kabelende auf einfache Art und Weise in den Verbindungskörper der Verbindungsmuffe eingebracht, geführt und zum Halten gebracht werden. Es ist daher nicht mehr erforderlich, aufwändige Verbindungsarbeiten durchzuführen. Vielmehr können die Kabelsteckteile ohne großen Aufwand in die Steckbereiche eingesteckt werden. Hierdurch kann sich insbesondere ein einfacher und fehlerunanfälliger Aufbau ergeben.

Eine vorteilhafte Ausgestaltung sieht vor, dass der Verbindungskörper einen mechanisch festen, elektrischen Isolierkörper, insbesondere einen Gießharzisolator, aufweist. Bevorzugt kann der Verbindungskörper derart ausgestaltet sein, dass Spannungen im Hochspannungsbereich, insbesondere von mehr als 150 kV, bevorzugt von mehr als 300 kV und besonders bevorzugt von mehr als 500 kV übertragen werden können. Alternativ oder zusätzlich ist jedoch auch ein Einsatz im Bereich der Mittelspannung möglich. Durch das Vorsehen eines solchen Isolierkörpers kann eine hochspannungsfeste Umhüllung des Verbindungsbereichs der Leiterenden bei gleichzeitiger Verbindung zu den Kabelisolierungen erreicht werden.

Als besonders vorteilhaft hat es sich dabei erwiesen, wenn der Verbindungskörper einen Gießharzisolator aufweist. Als Materialien können dabei hochfeste Kunststoffe wie beispielsweise Epoxidharz, Polyurethan oder VPE verwendet werden. Besonders bevorzugt ist, wenn die Steuereinlagen im Rahmen der Fertigung mit der isolierenden Schicht aus Gießharz umgossen werden, so dass sich ein abgeschlossener, hohlraumfreier Verbindungskörper ergeben kann. Der Verbindungskörper kann des Weiteren zylinderförmig ausgebildet sein und bevorzugt eine Länge im Bereich von 1 m bis 3 m, besonders bevorzugt eine Länge im Bereich von 1,5 m bis 2,5 m aufweisen.

Bevorzugt ist, wenn der Verbindungskörper in einem Gehäuse angeordnet ist. Auf diese Weise kann der Verbindungskörper vor Umgebungseinflüssen, wie Staub, Feuchtigkeit oder dergleichen geschützt werden, wodurch Beschädigungen und/oder Alterungsprozesse reduziert werden können. Das Gehäuse kann insbesondere aus Metall, Kunststoff oder dergleichen gefertigt sein. Das Gehäuse kann in Form eines Zylinderrohres ausgebildet sein. Auf diese Weise kann der Isolierkörper und damit auch die Verbindungsstelle der Kabelenden mit einem mechanischen Schutz umhüllt werden, welcher die isolierenden Eigenschaften des Kabelmantels erfüllt.

Als vorteilhaft hat es sich erwiesen, wenn das Gehäuse zweiteilig ausgebildet ist. Die beiden Teile des Gehäuses können bevorzugt von beiden Seiten auf den Verbindungskörper aufgeschoben werden und aneinander befestigt werden. Hierzu können an den Gehäuseteilen Flansche vorgesehen sein, welche korrespondierend ausgebildet sein können. Die Gehäuseteile können dann beispielsweise durch Schrauben, Bolzen oder dergleichen aneinander befestigt werden.

An dem Gehäuse können ferner Bereiche vorgesehen sein, an welchem die Kabelsteckteile befestigt werden können. Hierzu können beispielsweise an den dem Kabelsteckteil zugewandten Enden des Gehäuses Flansche vorgesehen sein, gegen welche am Kabelsteckteil angeordnete Vorsprünge anstoßen können. Durch das Verbinden der Flansche mit dem Kabelsteckteil können die Kabelsteckteile fest mit dem Verbindungskörper verbunden und insbesondere miteinander verschraubt werden.

Der Verbindungskörper weist eine stromtragfähige Verbindung zur elektrischen Verbindung der Leiter der Kabelenden auf. Die stromtragfähige Verbindung kann insbesondere bereichsweise als metallisches Rohr ausgebildet sein, über welches der Strom geführt werden kann. Die stromtragfähige Verbindung kann insbesondere zur Aufnahme von Leiteranschlussbolzen ausgebildet sein. Hierzu können an der stromtragfähigen Verbindung Verjüngungen, Vorsprünge oder dergleichen vorgesehen sein, welche eine kraft- und/oder formschlüssige Verbindung mit den Leiteranschlussbolzen eingehen können. Aufgrund der in dem Verbindungskörper angeordneten Steuereinlagen zur Steuerung des elektrischen Feldes kann in Abhängigkeit von der Dimensionierung der Steuereinlagen, auf aufwändige Schirm- oder Feldelektroden im Bereich der Verbindung der beiden Kabelenden verzichtet werden. Es sind jedoch auch Ausgestaltungen denkbar, bei welchen zusätzlich zu den Steuereinlagen Schirm- oder Feldelektroden vorgesehen sein können.

Bei einer vorteilhaften Ausgestaltung sind die Steckbereiche an gegenüberliegenden Seiten des Verbindungskörpers angeordnet. Eine Verbindung der Kabelenden der zu verbindenden Kabel kann so auf einfache Art und Weise in Längsrichtung der Kabel erfolgen, wodurch sich eine kompakte Bauform ergeben kann.

In diesem Zusammenhang ist es besonders vorteilhaft, wenn die Steckbereiche konisch, insbesondere in Form eines sich in Richtung der Mitte des Verbindungskörpers erstreckenden Innenkonus, ausgebildet sind. Durch die Ausgestaltung der Steckbereiche als Konen kann sich einerseits eine Art Führung ergeben, mittels welcher die Kabelsteckteile auf einfache Art und Weise in den Verbindungskörper eingeschoben und geführt werden können.

Darüber hinaus können durch eine konische Ausgestaltung der Steckbereiche auch positive elektrische Eigenschaften erzielt werden. So kann beispielsweise durch die Wahl der Länge und/oder des Winkels des Innenkonus eine ausreichende elektrische Festigkeit an der Grenzfläche eingestellt werden. Als bevorzugt haben sich dabei Längen im Bereich von 10 cm und 50 cm, jedoch besonders bevorzugt im Bereich von 20 cm und 30 cm erwiesen. Als bevorzugter Winkel zwischen der Längsachse der Verbindungsmuffe und der Grenzfläche des Innenkonus haben sich dabei Winkel von weniger als 60°, bevorzugt von weniger als 45° und besonders bevorzugt von im Wesentlichen 25° erwiesen. Der Innenkonus weist eine Form auf, welche an die Form der Kabelsteckteile angepasst ist, so dass sich im montierten Zustand eine hohlraumfreie Grenzfläche ergeben kann. Die Steckbereiche können dabei insbesondere als konische Hohlprofile ausgestaltet sein. Als besonders bevorzugt hat es sich erwiesen, wenn beide Steckbereiche des Verbindungskörpers als Konen ausgebildet sind.

Nachdem nun zunächst auf die konstruktive Ausgestaltung des Verbindungskörpers eingegangen wurde, soll nachfolgend auf Einzelheiten betreffend die Steuereinlagen zur Steuerung des elektrischen Feldes eingegangen werden.

Vorzugsweise sind die Steuereinlagen geschichtet und gegeneinander isoliert angeordnet. Die einzelnen Schichten der Steuereinlagen können bevorzugt in radialer Richtung übereinanderliegend angeordnet sein, so dass sich im Querschnitt eine ringförmige Anordnung der einzelnen Steuereinlagen ergeben kann. Die Steuereinlagen können ferner aus verschiedenen Materialien bestehen. Als vorteilhaft haben sich beispielsweise Steuereinlagen mit Schichten aus einem resistiven Material oder aus einem halbleitenden oder leitenden Material erwiesen. Besonders bevorzugt ist, wenn die einzelnen Steuereinlagen durch Schichten aus einem isolierenden Material, insbesondere in radialer Richtung, voneinander getrennt sind. Hierzu kann beispielsweise isolierendes Krepppapier verwendet werden. Durch die Kombination von Steuereinlagen und isolierende Schichten kann dann eine gezielte Feldsteuerung erreicht werden.

Eine in diesem Zusammenhang bevorzugte Ausgestaltung sieht vor, dass die Steuereinlagen elektrisch leitend sind und insbesondere rußhaltiges Papier und/oder Metall und/oder aus leitfähigen Kunststoff gefertigt sind. Die leitenden Schichten sind durch isolierende Schichten voneinander getrennt, zum Beispiel durch isolierendes Krepppapier. Durch die Wahl des jeweiligen Materials können die elektrischen Eigenschaften der einzelnen Steuereinlagen je nach Bedarf eingestellt werden.

Ferner ist es vorteilhaft, wenn die Steuereinlagen eine Wanddicke von weniger als 500 µm, insbesondere von weniger als 200 µm, aufweisen. Auf diese Weise kann eine große Anzahl an Schichten von Steuereinlagen in den Verbindungskörper eingebracht werden.

Eine weitere Ausgestaltung sieht vor, dass mindestens fünf Steuereinlagen, besonders bevorzugt mindestens acht Steuereinlagen, besonders bevorzugt mindestens zehn Steuereinlagen vorgesehen sind. Durch eine hohe Anzahl an Steuereinlagen kann das elektrische Feld noch besser beeinflusst werden. Auf diese Weise können die elektrischen Eigenschaften des Verbindungskörpers und der Verbindungsmuffe weiter verbessert werden.

Besonders bevorzugt ist, wenn eine in radialer Richtung innenliegende Steuereinlage auf Hochspannungspotential liegt und/oder eine in radialer Richtung außenliegende Steuereinlage geerdet ist. Das elektrische Feld kann so auf den Bereich zwischen der äußersten und der innersten Steuereinlage begrenzt und die Potentialverteilung des elektrischen Feldes gesteuert werden.

In Weiterbildung der Erfindung wird vorgeschlagen, dass die Steuereinlagen derart ausgestaltet sind, dass bei transienten Vorgängen eine kapazitive Feldsteuerung und/oder bei stationären Vorgängen bei Gleichspannungsanwendung eine resistive Feldsteuerung erzeugbar ist. Bei transienten Vorgängen können dabei insbesondere die Kapazitäten zwischen den einzelnen Steuereinlagen wirksam sein, so dass sich eine Feldverteilung gemäß eines kapazitiven Spannungsteilers ergeben kann. Im stationären Gleichspannungsfall können hingegen die Widerstände und/oder die Leitfähigkeiten zwischen den einzelnen Steuereinlagen wirksam sein, so dass in diesem Fall die Steuereinlagen wie ein resistiver Spannungsteiler wirken können. Die einzelnen leitfähigen Steuereinlagen können dabei jeweils ein Potential gemäß der relevanten Spannungsteiler annehmen.

Es ist ferner bevorzugt, wenn die Länge der einzelnen Steuereinlagen nach radial außen zunimmt und dem Abstand zwischen den Steckbereichen entspricht. Die Steuereinlagen können so eine Art Ring bilden, welcher eine im Wesentlichen kegelförmig ausgestaltete Querschnittsfläche aufweisen kann. Die Steuereinlagen können sich von dem einen Steckbereich zu dem anderen Steckbereich des Verbindungskörpers erstrecken und seitlich bis an die Konturen der Steckbereiche herangeführt sein. Die Steuereinlagen enden jedoch im Inneren des Verbindungskörpers. Durch das Heranführen der Steuereinlagen bis an die Grenzfläche kann die Potentialverteilung über die Enden der Steuereinlagen, insbesondere über die Grenzflächen der Innenkonen der Steckbereiche, auf die Kabelsteckteile der Kabelenden übertragen und in diese eingeprägt werden. Ferner kann auf diese Weise das elektrische Feld über den kompletten Bereich des Verbindungskörpers entsprechend den Anforderungen an die Verbindungsmuffe geführt werden. Hierdurch kann insbesondere auch auf eine Hochspannungselektrode oder dergleichen zur Steuerung des elektrischen Feldes im Bereich der Leiterverbinder verzichtet werden.

Vorzugsweise ist mittels der Steuereinlagen, insbesondere über den Abstand der Steuereinlagen zueinander, das elektrische Feld an den Grenzflächen des Verbindungskörpers einstellbar. Die einzelnen leitfähigen Steuereinlagen können jeweils ein Potential gemäß der relevanten Spannungsteiler annehmen. Durch die Wahl des Abstandes zwischen den einzelnen Steuereinlagen können diese Spannungsteiler angepasst und so das elektrische Feld an den Grenzschichten zwischen den Kabelsteckteilen und dem Verbindungskörper eingestellt werden. So kann die Feldverteilung vorgegeben und eingestellt werden.

In diesem Zusammenhang ist es besonders bevorzugt, wenn der Abstand zwischen den Steuereinlagen im Bereich von 0,5 mm bis 3 mm liegt, insbesondere im Bereich von 1 mm bis 2 mm liegt. Besonders bevorzugt kann der Abstand ferner im Bereich von 1,3 mm bis 1,8 mm liegen. Diese Bereiche haben sich als besonders vorteilhaft erwiesen, um eine elektrische Feldverteilung mit möglichst wenigen Verlusten zu erzeugen. Auf diese Weise kann das elektrische Feld geeignet durch den Verbindungskörper geführt werden.

Bei einer Verbindungsgarnitur der eingangs genannten Art wird die Aufgabe durch eine Verbindungsmuffe und zwei Kabelsteckteile zum Einstecken und Verbinden eines Kabelendes mit der Verbindungsmuffe **gelöst**. Dabei hat es sich als vorteilhaft herausgestellt, wenn die Verbindungsmuffe zumindest eines der zuvor beschriebenen Merkmale allein oder in Kombination aufweist. Es ergeben sich die gleichen Vorteile, welche zuvor im Zusammenhang mit der Verbindungsmuffe beschrieben wurden.

Als besonders vorteilhaft hat es sich erwiesen, wenn das Kabelsteckteil ein Feldsteuerelement aufweist, mittels welchem die Potentialverteilung an den Grenzflächen zu dem Verbindungskörper zusätzlich eingestellt werden können. Das Feldsteuerelement kann bevorzugt konisch ausgebildet und insbesondere komplementär zum Steckbereich des Verbindungskörpers ausgebildet sein. Besonders bevorzugt ist, wenn das Feldsteuerelement einen Isolierköper und/oder eine Feldsteuerelektrode umfasst. Der Isolierkörper kann ebenfalls von konischer Form sein und besonders bevorzugt aus einem elastomeren Material, wie Silikon, EPDM oder EPR ausgebildet sein. Auf diese Weise kann die Feldverteilung über den gesamten Bereich zuverlässig eingestellt werden. An das Feldsteuerelement können sich in Längsrichtung des Kabels ein Metallkörper, welcher als metallisches Druckstück dienen kann, und/oder eine Anpresseinheit anschließen. Das Feldsteuerelement kann ferner derart ausgestaltet sein, dass es sich beim Einpressen in den Verbindungskörper deformieren kann. Auf diese Weise kann eine formschlüssige Verbindung erreicht werden.

Eine bevorzugte Ausgestaltung sieht dabei vor, dass mittels des Kabelsteckteils Kabel mit unterschiedlichen Querschnitten und/oder unterschiedlichen elektrischen Eigenschaften miteinander verbindbar sind. Hierzu kann das Kabelsteckteil bevorzugt einen Leiteranschlussbolzen aufweisen, welcher zur Verbindung des Kabels und insbesondere zur Verbindung des Leiters des Kabels mit der stromtragfähigen Verbindung des Verbindungskörpers auf das Kabelende aufgebracht werden kann. Bei einem solchen Leiteranschlussbolzen kann es sich bevorzugt um eine Art metallische Kappe handeln, welche auf die vorbereitete Ader eines Kabels, beispielsweise durch Pressen oder Schrauben, aufgebracht werden kann. Auf diese Weise kann eine mechanisch feste und stromtragfähige Verbindung zum Kabelleiter hergestellt werden. Der Leiteranschlussbolzen kann ein stromtragfähiges Kontaktelement aufweisen, welches den Strom übertragen kann. Der Leiteranschlussbolzen kann aus einem leitenden Material gefertigt sein, beispielsweise aus Metall. Am vorderen Ende des Leiteranschlussbolzens kann ferner eine Kontaktfeder, beispielsweise eine gekröpfte Feder oder Lamellenringe, vorgesehen sein, welche zur Verbindung des Leiteranschlussbolzens mit der stromtragfähigen Verbindung dienen kann. Die Leiteranschlussbolzen können dabei eine äußere Form aufweisen, welche an die Steckbereiche des Verbindungskörpers angepasst ist, so dass sich eine Vielzahl von Kabeln mit unterschiedlichen Leiterquerschnitten und/oder Isolierwanddicken verbinden lassen. Durch eine definierte äußere Kontur des Leiteranschlussbolzens und durch ein an die jeweiligen Anforderungen angepasstes Feldsteuerelement, beispielsweise mit unterschiedlichen Bohrungen und Aussenkonturen, kann ein Kabelsteckteil für einen Vielzahl von Kabeln mit unterschiedlichen Leiterquerschnitten und Isolierungen verwendet werden. Auf diese Weise ergibt sich die Möglichkeit, unterschiedliche Kabel miteinander zu verbinden.

Bevorzugt ist ferner, wenn das Kabelsteckteil mittels einer Anpresseinheit in den Verbindungskörper einpressbar ist. Die Anpresseinheit kann hierzu bevorzugt Federelemente aufweisen, welche sich unter Druck verformen können. Durch eine solche Anpresseinheit kann das Kabelsteckteil formschlüssig mit der Kontur der Innenkonen der Steckbereiche verbunden werden. Mit Hilfe der Federelemente können zusätzlich insbesondere Verformungsprozesse, beispielsweise bei Temperaturschwankungen im Betrieb, ausgeglichen werden.

Bei einem Kabelsystem der eingangs genannten Art wird die Aufgabe durch zwei Kabel und eine Verbindungsgarnitur **gelöst**. Auch hier ergeben sich die gleichen Vorteile, welche bereits im Zusammenhang mit der Verbindungsmuffe und/oder der Verbindungsgarnitur beschrieben wurden, wobei einzelne Merkmale allein oder in Kombination Verwendung finden können.

Eine vorteilhafte Ausgestaltung des Kabelsystems sieht dabei vor, dass die Kabel unterschiedliche Leiterquerschnitte aufweisen. Durch das Vorsehen der Steckbereiche in dem Verbindungskörper der Verbindungsmuffe sowie durch die Kabelsteckteile können bevorzugt auch Kabel mit unterschiedlichen elektrischen Eigenschaften miteinander über die Verbindungsmuffe verbunden werden, da die Unterschiede über die Kabelsteckteile ausgeglichen werden können. In elektrischer Hinsicht können auch Kabel miteinander verbunden werden, die unterschiedliche Materialparameter und damit unterschiedliche elektrische Eigenschaften aufweisen, da die Einprägung der Potentialverteilung des Isolierkörpers, insbesondere bei Gleichspannungsanwendungen, stark dominierend ist. Durch die Einprägung der Potentialverteilung über die leitfähigen Steuereinlagen innerhalb eines Verbindungskörpers ist es daher möglich, die unterschiedlichen Materialparameter der Kabelisolierung zu verdrängen.

Ferner wird zur **Lösung** der eingangs genannten Aufgabe ein Verfahren zum Verbinden von zwei, einen unterschiedlichen Durchmesser aufweisenden Kabelenden, insbesondere von zwei Hochspannungsgleichspannungskabelenden, mit einer Verbindungsmuffe vorgeschlagen, bei welchen die Kabelsteckteile an den Kabelenden angeordnet werden und die Kabelsteckteile in den Verbindungskörper der Verbindungsmuffe eingeführt werden. Dabei hat es sich als besonders vorteilhaft erwiesen, wenn die Verbindungsmuffe mindestens eines der zuvor beschriebenen Merkmale aufweist.

Durch das Vorsehen einer erfindungsgemäßen Verbindungsmuffe zusammen mit an den Kabelenden angeordneten Kabelsteckteilen können Kabel auf einfache Art und Weise miteinander verbunden werden. Die Kabelsteckteile können beispielsweise werksseitig auf die Enden aufgebracht werden, so dass es am Einbauort lediglich erforderlich ist, die Kabelsteckteile in die Verbindungsmuffe einzustecken und diese mechanisch miteinander zu verbinden. Auf diese Weise ergibt sich eine einfache Montage, ohne dass diese besonders fehleranfällig ist. Ferner können insbesondere auch Kabel mit unterschiedlichen Durchmessern und/oder unterschiedlichen elektrischen Eigenschaften miteinander verbunden werden, da es lediglich erforderlich ist, die Kabelsteckteile an den Verbindungskörper anzupassen. Die Kabelsteckteile können bevorzugt derart ausgebildet sein, dass diese an der Verbindungsmuffe mechanisch arretiert werden können. Hierzu können beispielsweise Schraub- oder Steckverbindungen verwendet werden.

Bei dem Verfahren können auch die anhand der Verbindungsmuffe und/oder der Verbindungsgarnitur und/oder des Kabelsystems beschriebenen Merkmale und Ausgestaltungen allein und in Kombination verwendet werden.

Weitere Einzelheiten und Vorteile der Erfindung sollen nachfolgend anhand des in den Zeichnungen dargestellten Ausführungsbeispiels näher erläutert werden. Hierin zeigt:
- Fig. 1: einen Längsschnitt durch eine erfindungsgemäße Verbindungsmuffe mit eingesteckten Kabelsteckteilen;
- Fig. 2: einen Teilausschnitt durch eine erfindungsgemäße Verbindungsmuffe ohne eingestecktes Kabelsteckteil; und
- Fig. 3: eine schematische Darstellung des Potentialverlaufs.

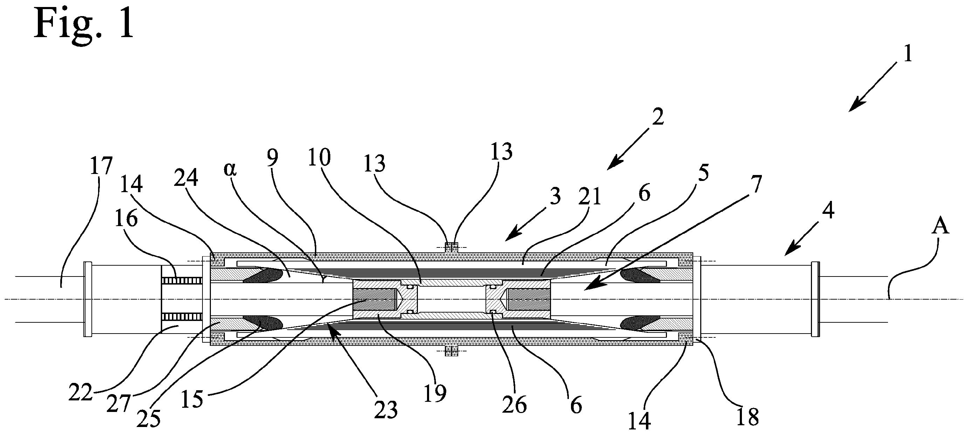

In der Fig. 1 ist ein Ausführungsbeispiel einer erfindungsgemäßen Verbindungsmuffe 3 dargestellt, mittels welcher zwei Kabelenden 4 zweier Kabel 17 verbunden werden können. Verbindungsmuffen 3 werden in vielen Bereichen der Energietechnik im Bereich der Hochspannung und der Höchstspannung zur Verbindung von Hochspannungskabeln, beispielsweise von Erdkabeln oder dergleichen, verwendet. Mit Hilfe der Verbindungsmuffen 3 können Kabelenden 4 sowohl von Gleichspannungskabeln als auch von Wechselspannungskabeln auf einfache Art und Weise verbunden werden. Die Verbindungsmuffen 3 schützen dabei die Verbindungsstelle der Kabelenden 4 der Kabel 17 vor äußeren Einflüssen, wie beispielsweise Feuchtigkeit, Staub oder dem Eindringen von Fremdkörpern, da die Verbindungsstelle vollständig umschlossen wird.

Bei bekannten Verbindungsmuffen 3 werden die Kabelenden 4 zunächst entsprechend vorbereitet und dann in die Verbindungsmuffe 3 eingeschoben und dort fixiert. Zur Feldsteuerung sind insbesondere im Bereich der Wechselspannung zumeist Hochspannungselektroden vorgesehen, wie Schirm- oder Feldelektroden, deren Herstellung jedoch sehr aufwendig ist. Insgesamt haben sich diese Verbindungsmuffen 3 zwar durchaus bewährt, jedoch haben sie sich sowohl hinsichtlich des Montageaufwands als auch hinsichtlich ihrer elektrischen Eigenschaften insbesondere bei Gleichspannungsanwendung als eher nachteilig erwiesen.

Grundsätzlich ergeben sich die Feldverhältnisse bei Wechsel- und Stoßspannungen als kapazitives Verschiebungsfeld, das von den Materialien bestimmt wird. Bei Gleichspannung bildet sich ein oftmals völlig anderes resistives Strömungsfeld aus, für das die Leitfähigkeiten verantwortlich sind. Mischfelder und transiente Belastungen führen dabei zu sehr komplexen Feldverhältnissen, welche bei der Ausgestaltung einer Verbindungsmuffe 3 zu berücksichtigen ist. Insoweit ist es in der Regel nicht möglich, standardmäßige AC-Verbindungsmuffen 3 auch als DC-Verbindungsmuffen 3 zu verwenden. Die Feldverteilungen in Kabelsystemen unterscheiden sich bei Gleichspannung grundsätzlich von den üblicherweise betrachteten dielektrischen Verschiebungsfeldern bei Wechsel- und Stoßspannungsbelastung. Bei sehr lange anstehender Gleichspannung bildet sich ein stationäres Strömungsfeld aus, dessen Feldverteilung nicht mehr von den Dielektrizitätszahlen, sondern von den stationären Leitfähigkeiten der Isoliermaterialien bestimmt wird. Dadurch werden Materialien mit höherer Leitfähigkeit entlastet und hochohmige Materialien mit niedriger Leitfähigkeit sehr stark belastet. Es kommt erschwerend hinzu, dass nach dem Zuschalten, Ändern oder Umpolen einer Gleichspannung Verschiebungsfelder auftreten, die in einem transienten Vorgang dem stationären Strömungsfeld zustreben, wobei schwer überschaubare Feldmigrationen und Belastungsmaxima auftreten können. Ein Gleichspannungsverbindungssystem muss all diesen Situationen Rechnung tragen.

Ein wichtiger Punkt stellt dabei bei der Verbindung zweier Kabel 17 die Feldsteuerung im Bereich der Verbindungsmuffe 3 dar. Denn die im Kabel 17 auftretende Spannung und insbesondere die im Kabel 17 auftretenden Feldstärken unterscheiden sich deutlich, je nachdem ob eine Verwendung mit Wechselspannung oder Gleichspannung erfolgt. Aufgrund dessen können zwei Kabel 17 auf einfache Weise mit bekannten Muffen 3 verbunden werden, welche etwa über eine Hochspannungselektrode verfügen. Bei Gleichspannungsanwendungen, insbesondere bei Spannungen über 250 kV, ist die Feldstärke jedoch abhängig von transienten und statischen Vorgängen in Kabel 17, welche nicht mit bekannten Muffen 3 gehandhabt werden können.

Durch die erfindungsgemäße Verbindungsmuffe 3 können diese Nachteile behoben werden. Wie dies die Fig. 1 zeigt, weist die Verbindungsmuffe 3 einen Verbindungskörper 5 auf, welcher zum einen Steuereinlagen 6 zur Steuerung des elektrischen Feldes sowie zwei Steckbereiche 8 aufweist, in welche jeweils ein auf ein Kabelende 4 aufbringbares Kabelsteckteil 7 eingesteckt werden kann. Auf diese Weise kann eine Verbindungsmuffe 3 angegeben werden, mit welcher die elektrischen Eigenschaften, aber auch die Montage insbesondere bei Gleichspannungsanwendungen vereinfacht werden kann. Hierdurch können Verbindungsmuffen 3 auch bei Gleichspannungsanwendungen, insbesondere im Bereich der Hoch- und Höchstspannung Anwendung finden. Durch einen Verbindungskörper 5 mit Steuereinlagen 6 kann die Potentialverteilung in dem Verbindungskörper 5 vorgegeben werden. Darüber hinaus können durch das Vorsehen von an Kabelsteckteile 7 angepassten Steckbereichen 8 die Montage und insbesondere die Montagezeit gegenüber bekannten Lösungen verbessert werden.

Die Verbindungsmuffe 3 ist im Wesentlichen schichtartig aufgebaut. Darüber hinaus weist die Verbindungsmuffe 3 einen rotationssymmetrischen Aufbau auf. Im Inneren der Verbindungsmuffe 3 ist in der Mitte des Verbindungskörpers 5 eine stromtragfähige Verbindung 10 angeordnet, welche die Leiter 15 der Kabelenden 4 elektrisch miteinander verbindet, so dass eine Strom- und/oder Spannungsübertragung erfolgen kann. Die stromtragfähige Verbindung 10 ist im vorliegenden Ausführungsbeispiel als metallisches Rohr ausgebildet, über welches der Strom durch die Verbindungsmuffe 3 geführt werden kann. Die stromtragfähige Verbindung 10 ist zur Aufnahme von Leiteranschlussbolzen 19 ausgebildet, welche an den Kabelsteckteilen 7 angeordnet sind. Hierzu können an der stromtragfähigen Verbindung 10 Verjüngungen, Vorsprünge oder dergleichen zur Verbindung mit den Leiteranschlussbolzen 19 vorgesehen sein. Die stromtragfähige Verbindung 10 ist dabei feldelektrodenfrei ausgestaltet, d. h. es ist nicht notwendig, aufwendige Schirm- oder Feldelektroden zur Steuerung des elektrischen Feldes vorzusehen. Vielmehr kann es sich um eine einfache elektrische Verbindung, beispielsweise in Form eines Metallrohres mit Kontaktlamellen oder dergleichen, handeln. Je nach Bedarf kann die stromtragfähige Verbindung 10 jedoch zusätzlich auch Feldelektroden aufweisen.

In radialer Richtung weiter außen folgen dann auf die stromtragfähige Verbindung 10 die Steuereinlagen 6 zur Steuerung des elektrischen Feldes. Durch die Wahl der Steuereinlagen 6 und insbesondere der Wahl deren Materialien und Abstände, kann die Potentialverteilung innerhalb des Verbindungskörpers 5 eingestellt werden.

Die Steuereinlagen 6 sind rotationssymmetrisch ausgestaltet und insbesondere geschichtet und gegeneinander isoliert in dem Verbindungskörper 5 angeordnet. Die einzelnen Schichten der Steuereinlagen 6 erstrecken sich dabei in radialer Richtung, so dass sich im Querschnitt eine ringförmige Anordnung ergibt. Die Steuereinlagen 6 können aus verschiedensten Materialien hergestellt sein und unterschiedliche elektrische Eigenschaften aufweisen. So hat es sich als vorteilhaft erwiesen, wenn verschiedene Steuereinlagen 6 mit leitenden, halbleitenden oder resistiven Eigenschaften verwendet werden. Die Steuereinlagen 6 können beispielsweise aus rußhaltigem Papier und/oder Metall und/oder aus einem leitfähigen Kunststoff gefertigt sein und eine Wanddicke von weniger als 500 µm, insbesondere von weniger als 200 µm aufweisen.

Die einzelnen Steuereinlagen 6 sind in radialer Richtung durch Schichten 20 aus einem isolierenden Material, wie isolierendes Krepppapier, voneinander getrennt. Durch die Kombination von Steuereinlagen 6 und isolierenden Schichten 20 kann dann eine gezielte Feldsteuerung erreicht werden. Insbesondere ist es möglich, auf zusätzliche Materialien mit feldsteuernden Eigenschaften, wie FGM oder nicht-lineare resistive feldsteuernde Materialien zu verzichten. Hierdurch können die Kosten gesenkt und Nachteile, welche aufgrund der Verwendung solcher Materialien bei der Prüfung von Gleichspannungssystemen mit Wechselspannung auftreten können, vermieden werden.

Die innerste Steuereinlage 6 der Steuereinlagen 6 liegt auf Hochspannungspotential und die radial am weitesten außen liegende Steuereinlage 6 kann geerdet sein. Aufgrund dessen ist dann das elektrische Feld auf den Bereich zwischen dieser äußersten und der innersten Steuereinlage 6 begrenzt. Auf diese Weise ist mit Hilfe der Steuereinlagen 6 und den isolierenden Schichten 20 bei transienten Vorgängen eine kapazitive Feldsteuerung und/oder bei Gleichspannungsanwendungen eine resistive Feldsteuerung erzeugbar. Bei transienten Vorgängen wirken die Kapazitäten zwischen den einzelnen Steuereinlagen 6 und es ergibt sich eine Feldverteilung gemäß einem kapazitiven Spannungsteiler. Im stationären Gleichspannungsfall hingegen sind die Widerstände und/oder die Leitfähigkeiten vorherrschend, so dass sich in diesem Fall die Steuereinlagen 6 wie ein resistiver Spannungsteiler auswirken. Da die einzelnen Steuereinlagen 6 jeweils ein Potential gemäß der relevanten Spannungsteiler annehmen, kann das elektrische Feld insbesondere über den Abstand der leitfähigen Steuereinlagen 6 eingestellt werden. Dieser Abstand zwischen den Steuereinlagen 6 kann dabei bevorzugt im Bereich von 0,5 mm bis 3 mm, besonders bevorzugt im Bereich von 1 mm bis 2 mm und besonders bevorzugt im Bereich von 1,2 mm bis 1,8 mm liegen.

Die Steuereinlagen 6 wiederum können in den Verbindungskörper 5 eingebettet werden. Der Verbindungskörper 5 kann hierzu beispielsweise einen mechanisch festen, elektrischen Isolierkörper 21 und insbesondere einen Gießharzisolator 21 aufweisen sein. Als Materialien haben sich dabei beispielsweise Epoxidharze, VPE-Materialien oder Polyurethane als vorteilhaft erwiesen. Durch das Vorsehen eines solchen Isolierkörpers 21 kann eine hochspannungsfeste Umhüllung des Verbindungsbereichs der Leiterenden 15 bei gleichzeitiger Verbindung zu den Kabelisolierungen erreicht werden.

Der Verbindungskörper 5 ist insgesamt zylinderförmig und von seinem Aufbau her ebenfalls rotationssymmetrisch ausgestaltet. Der Verbindungskörper 5 ist in einem Gehäuse 9 angeordnet, welches den Verbindungskörper 5 vollständig umschließt und diesen so vor Umgebungseinflüssen schützt. Das Gehäuse 9 ist als zweiteiliges Zylinderrohr ausgebildet, so dass die beiden Teilelemente des Gehäuses 9 von beiden Seiten des Verbindungskörpers 5 her auf diesen aufgeschoben werden können. Eine solche Ausgestaltung hat sich dabei als vorteilhaft erwiesen, da bei einer derartigen Ausgestaltung Flansche 14 an den jeweiligen Enden der Teilelemente des Gehäuses 9 vorgesehen werden können, welche dann zur Verbindung des Kabelsteckteils 7 mit der Verbindungsmuffe 3 verwendet werden können. Hierzu können beispielsweise an den dem Kabelsteckteil 7 zugewandten Enden des Gehäuses 9 Flansche 14 vorgesehen sein, gegen welche am Kabelsteckteil 7 angeordnete Vorsprünge 18 anstoßen können. Durch das Verbinden der Flansche 14 mit dem Kabelsteckteil 7 können die Kabelsteckteile 7 fest mit dem Verbindungskörper 5 miteinander verschraubt werden. Die beiden Teilelemente des Gehäuses 9 können zusätzlich über Flansche 13, welche jeweils an einem Teil des Gehäuses 9 vorgesehen sind, mechanisch miteinander verbunden werden. Dies kann beispielsweise über Schrauben, Bolzen oder dergleichen vorgenommen werden. Auf diese Weise ergibt sich eine mechanische Arretierung des Verbindungskörpers 5 in dem Gehäuse 9.

Erfindungsgemäß weisen sowohl das Gehäuse 9 als auch der Verbindungskörper 5 an den sich gegenüber liegenden Seiten jeweils Steckbereiche 8 zur Aufnahme eines korrespondierenden Kabelsteckteils 7 auf. Die Steckbereiche 8 sind konisch ausgebildet, insbesondere in Form eines sich in Richtung der Mitte des Verbindungskörpers 5 erstreckenden Innenkonus. Durch eine derartige Ausgestaltung der Steckbereiche 8 kann auf einfache Art und Weise ein korrespondierend ausgebildetes Kabelsteckteil 7 in den Verbindungskörper 5 eingesteckt werden. Die Steckbereiche 8 des Verbindungskörpers 5 sind dabei an die Kabelsteckteile 7 angepasst. In der Fig. 1 sind die Kabelsteckteile 7 bereits in die Steckbereiche 8 des Verbindungskörpers 5 eingesteckt.

Durch die konische Ausgestaltung der Steckbereiche 8 können des Weiteren auch positive elektrische Eigenschaften erzielt werden. So kann beispielsweise durch die Wahl der Länge L und/oder des Winkels α des Innenkonus eine ausreichende elektrische Festigkeit an der Grenzfläche 12 eingestellt werden. Als bevorzugt haben sich dabei Längen L im Bereich von 10 cm und 50 cm, jedoch besonders bevorzugt im Bereich von 20 cm und 30 cm erwiesen. Als bevorzugter Winkel α zwischen der Längsachse A der Verbindungsmuffe 3 und der Grenzfläche 12 des Innenkonus haben sich dabei Winkel α von weniger als 60°, bevorzugt von weniger als 45° und besonders bevorzugt von im Wesentlichen 25° erwiesen. Der Steckbereich 8 weist eine Form auf, welche an die Form der Kabelsteckteile 7 angepasst ist, so dass sich im montierten Zustand eine hohlraumfreie Grenzfläche 12 ergeben kann.

Wie dies ferner der Fig. 1 zu entnehmen ist, erstrecken sich die Steuereinlagen 6 von dem einen Steckbereich 8 bis hin zu dem anderen Steckbereich 8, wobei die Steuereinlagen 6 seitlich bis an die Kontur 11 des Steckbereichs 8 herangeführt sind. Die Länge der einzelnen Steuereinlagen 6 nimmt dabei in radialer Richtung nach außen hin zu, wobei die Länge der einzelnen Steuereinlagen 6 dem Abstand zwischen den Steckbereichen 8 entspricht. Die einzelnen Steuereinlagen 6 ergeben so insgesamt eine torusförmige Form, wobei der Querschnitt des Torus pyramidenförmig oder kegelförmig ausgestaltet ist. Insgesamt kann eine Vielzahl von Steuereinlagen 6 vorgesehen sein. Dabei hat es sich jedoch als bevorzugt erwiesen, wenn mindestens fünf Steuereinlagen 6, bevorzugt mindestens acht Steuereinlagen 6 und besonders bevorzugt mindestens zehn Steuereinlagen 6 vorgesehen sind.

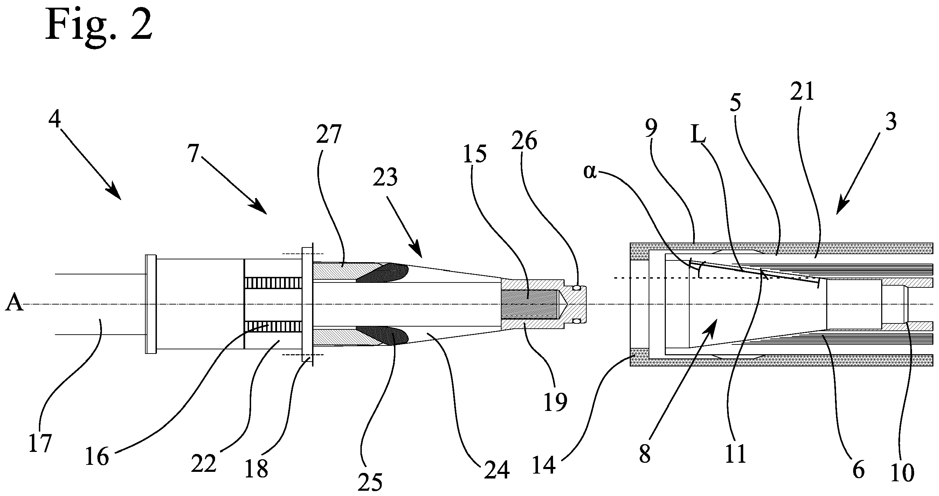

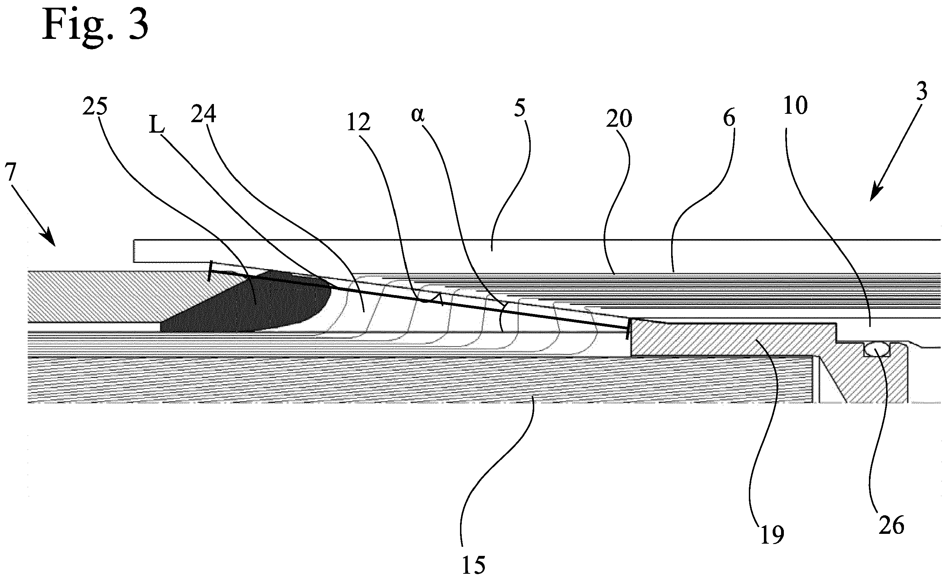

Die Fig. 2 zeigt eine erfindungsgemäße Verbindungsmuffe 3 im ungesteckten Zustand. Hier lässt sich der Steckbereich 8, insbesondere mit seiner konisch ausgebildeten Form 11, deutlich erkennen. Das korrespondierend ausgebildete Kabelsteckteil 7 weist ebenfalls eine insgesamt konische Form auf, wobei sich der Konus in Richtung des Kabelendes 4 erstreckt. Das Kabelsteckteil 7 weist ein Feldsteuerelement 23 auf, welcher sich in radialer Richtung um den Leiter 15 des Kabelendes 4 erstreckt und ebenfalls konisch ausgebildet ist. Über das Feldsteuerelement 23 kann die elektrische Feldverteilung im Bereich der Grenzflächen 12 zusätzlich beeinflusst werden. Einen solchen Verlauf der Potentialverteilung an den Grenzflächen 12 zeigt in beispielhafter Weise Fig. 3.

Wie dies dort zu erkennen ist, wird das elektrische Feld über die Steuereinlagen 6 der Verbindungsmuffe 3 innerhalb des Verbindungskörpers 5 geführt. An der Grenzfläche 12 tritt das elektrische Feld dann in das Kabelsteckteil 7 und insbesondere in das Feldsteuerelement 23 ein. Insoweit wird die Potentialverteilung über die Enden der Steuereinlagen 6 an den Innenkonen auf das Feldsteuerelement 23 übertragen und dort eingeprägt. Durch das Heranführen der Steuereinlagen 6 bis an die Grenzfläche 12 kann die Feldverteilung im Bereich des Übergangs zwischen zwei Feststoffen eingestellt und kontrolliert werden. Insoweit kann eine Kontrolle der Feldstärke im Inneren der Muffe 3 erfolgen. Dabei ist die Potentialverteilung abhängig von dem Abstand der leitfähigen Steuereinlagen 6. Während der transienten Vorgänge wirken zudem die Erdelektroden in den polymeren Isolierkörpern der Kabelsteckteile 7. Bevorzugt ist, wenn das Kabelsteckteil 7 mittels einer Anpresseinheit 22 in den Verbindungskörper 5 einpressbar ist. Durch eine solche Anpresseinheit 22 kann das Kabelsteckteil 5 formschlüssig mit der Kontur der Innenkonen 11 der Steckbereiche 8 verbunden werden.

Die Verbindungsmuffe 3 stellt einen Teil einer Verbindungsgarnitur 2 dar, welche eine erfindungsgemäße Verbindungsmuffe 3 sowie zwei Kabelsteckteile 7 zum Einstecken und Verbinden des Kabelendes 4 mit der Verbindungsmuffe 3 umfasst. Die Verbindungsgarnitur 2 wiederum stellt einen Teil eines Kabelsystems 1 dar, insbesondere eines Kabelsystems 1 für Hochspannungsgleichspannungsanwendungen, mit zwei Kabeln und einer Verbindungsgarnitur 2.

Wie dies beispielsweise die Fig. 2 zeigt, weist das Kabelsteckteil 7 ein Feldsteuerelement 23 auf, mittels welchem die Potentialverteilung an der Grenzfläche 12 zu dem Verbindungskörper 5 zusätzlich eingestellt werden kann. Das Feldsteuerelement 23 ist ebenfalls konisch und insbesondere komplementär zum Steckbereich 8 des Verbindungskörpers 5 ausgebildet. Wie dies die Fig. 2 weiter zeigt, weist das Feldsteuerelement 23 einen Isolierköper 24 und eine Feldsteuerelektrode 25 auf. Der konische Isolierkörper 24 ist aus einem elastomeren Material, wie Silikon, EPDM oder EPR gefertigt, so dass dieser isolierende Eigenschaften aufweist. In Längsrichtung A des Kabelsteckteils 7 schließen sich an das Feldsteuerelement 23 ein als metallisches Druckstück ausgebildeter Metallkörper 27 sowie eine aus mehreren Federelementen 16 bestehende Anpresseinheit 22 an. Beim Einpressen in den Verbindungskörper 5 deformiert sich das Feldsteuerelement 23, so dass sich eine formschlüssige Verbindung ergibt. Mit Hilfe der Federelemente 16 können zusätzlich Veränderungen des Materials, etwa bei Temperaturschwankungen, ausgeglichen werden.

Am vorderen Ende des Kabelsteckteils 7 ist ein Leiteranschlussbolzen 19 angeordnet, welcher zur Verbindung des Leiters 15 des Kabelendes 4 mit der stromtragfähigen Verbindung 10 des Verbindungskörpers 5 auf das Kabelende 4 aufgebracht werden kann. Der Leiteranschlussbolzen 19 ist aus einem metallischen Werkstoff, beispielsweise nach Art einer Kappe, welche auf den vorbereiteten Leiter 15 durch Pressen oder Schrauben aufgebracht werden kann. Auf diese Weise kann eine mechanisch feste und stromtragfähige Verbindung zum Kabelleiter 15 hergestellt werden. Am vorderen Ende des Leiteranschlussbolzens 19 ist eine Kontaktfeder 26, beispielsweise eine gekröpfte Feder oder Lamellenringe, vorgesehen, welche zur formschlüssigen Verbindung des Leiteranschlussbolzens 19 mit der stromtragfähigen Verbindung 10 ausgebildet ist.

Durch eine definierte äußere Kontur des Leiteranschlussbolzens 19 und durch ein an die jeweiligen Anforderungen angepasstes Feldsteuerelement 23, beispielsweise mit unterschiedlichen Bohrungen und Aussenkonturen, kann ein Kabelsteckteil 7 für einen Vielzahl von Kabelenden 4 mit unterschiedlichen Leiterquerschnitten und Isolierungen verwendet werden.

Mit solch einem Kabelsystem 1 und insbesondere einer solchen Verbindungsgarnitur 2 können Kabelenden 4 mit unterschiedlichen elektrischen Eigenschaften und/oder unterschiedliche Durchmesser verbunden werden. Dies ist bei normalen Muffen aufgrund unterschiedlicher Materialparameter nicht möglich. Mit der erfindungsgemäßen Verbindungsgarnitur 2 ist dies jedoch aufgrund der Einprägung der Potentialverteilung über die leitfähigen Steuereinlagen 6 innerhalb des Verbindungskörpers 5 möglich. Denn in diesem Fall sind die unterschiedlichen Materialparameter weniger ausschlaggebend. Vielmehr ist die Einprägung der Potentialverteilung dominierend.

Zwei einen unterschiedlichen Durchmesser aufweisende Kabelenden 4 können dabei mit einer erfindungsgemäßen Verbindungsmuffe 3 entsprechend verbunden werden. Dabei können zunächst die Kabelsteckteile 7 und insbesondere die Leiteranschlussbolzen 19 an den Kabelenden 4 angeordnet werden und dann die Kabelsteckteile 7 in den Verbindungskörper 5 der Verbindungsmuffe 3 eingeführt und dort zum Halten gebracht werden. Bei Bedarf können hierzu nicht näher dargestellte Arretierungsmittel vorgesehen sein. Die Kabelsteckteile 7 7 und insbesondere die Leiteranschlussbolzen 19 können dabei beispielsweise schon werkseitig auf die Kabelenden 4 aufgebracht werden. Da es lediglich erforderlich ist, die Kabelsteckteile 7 an die Form der Steckbereiche 8 anzupassen, können somit auch unterschiedliche Kabel 17 mit unterschiedlichen Durchmessern und unterschiedlichen elektrischen Eigenschaften miteinander verbunden werden.

Der Anwendungsbereich der erfindungsgemäßen Verbindungsmuffe 3 sowie der Verbindungsgarnitur 2 und des Kabelsystems 1 liegt vorteilhaft bei Spannungen höher als 150 kV. Besonders bevorzugt sind jedoch Anwendungsbereiche von mehr als 300 kV, insbesondere von mehr als 500 kV. Es sind jedoch auch Anwendungen im Bereich der Mittelspannung möglich. Die erfindungsgemäße Verbindungsmuffe 3 eignet sich dabei sowohl für Gleichspannungsanwendungen als auch für Hochspannungswendungen. Allerdings hat es sich als besonders vorteilhaft erwiesen, wenn die Verbindungsmuffe 3 bei Hochspannungsgleichspannungsanwendungen Einsatz findet. Eine Anpassung an höhere Spannungen lässt sich dabei insbesondere durch die Anpassungen der Maße des Verbindungskörpers 5 sowie der Steuereinlagen 5 erreichen. Zudem eignet sich die Verbindungsmuffe 3 auch für den Einsatz im Bereich der Erdkabel, wo andere Anforderungen gelten, als dies beispielsweise bei Durchführungen oder Kabelendverschlüssen der Fall ist.

Mit Hilfe einer erfindungsgemäßen Verbindungsmuffe 3 mit einem Verbindungskörper 5, welcher Steuereinlagen 6 sowie Steckbereiche 8 aufweist, können auch Kabel 17 unterschiedlicher Durchmesser miteinander verbunden werden. Hierzu können Kabelsteckteile 7, welche an den Kabelenden 4 anordbar sind, in die Steckbereiche 8 der Verbindungsmuffe 3 eingesteckt und dort arretiert werden. Es ergibt sich eine einfache Montage sowie verbesserte elektrische Eigenschaften durch die Ausgestaltung der Steuereinlagen 6.

### Bezugszeichen:

- 1: Kabelsystem
- 2: Verbindungsgarnitur
- 3: Verbindungsmuffe
- 4: Kabelende
- 5: Verbindungskörper
- 6: Steuereinlage
- 7: Kabelsteckteil
- 8: Steckbereich
- 9: Gehäuse
- 10: Stromtragfähige Verbindung
- 11: Kontur des Steckbereichs
- 12: Grenzfläche
- 13: Flansch
- 14: Flansch
- 15: Leiter
- 16: Federelement
- 17: Kabel
- 18: Vorsprung
- 19: Leiteranschlussbolzen
- 20: isolierende Schicht
- 21: Isolierkörper
- 22: Anpresseinheit
- 23: Feldsteuerelement
- 24: Isolierkörper
- 25: Feldsteuerelektrode
- 26: Kontaktfeder
- 27: Metallkörper
- L: Länge
- A: Längsachse
- α: Winkel

## Patentansprüche

1. Verbindungsmuffe zur Verbindung von Kabelenden (4), insbesondere von Gleichspannungskabeln (17), mit einem Verbindungskörper (5), der Steuereinlagen (6) zur Steuerung des elektrischen Feldes und zwei jeweils an ein auf ein Kabelende (4) aufbringbares Kabelsteckteil (7) angepasste Steckbereiche (8) zur Aufnahme der Kabelsteckteile (7) aufweist.

2. Verbindungsmuffe nach Anspruch 1, **dadurch gekennzeichnet, dass** der Verbindungskörper (5) eine stromtragfähige Verbindung (10), insbesondere eine feldelektrodenfreie Verbindung, zur elektrischen Verbindung der Leiter (15) der Kabelenden (4) aufweist.

3. Verbindungsmuffe nach einem der vorhergehenden Ansprüche, **dadurch gekennzeichnet, dass** die Steckbereiche (8) an gegenüberliegenden Seiten des Verbindungskörpers (5) angeordnet sind.

4. Verbindungsmuffe nach einem der vorhergehenden Ansprüche, **dadurch gekennzeichnet, dass** die Steckbereiche (8) konisch, insbesondere in Form eines sich in Richtung der Mitte des Verbindungskörpers (5) erstreckenden Innenkonus, ausgebildet sind.

5. Verbindungsmuffe nach einem der vorhergehenden Ansprüche, **dadurch gekennzeichnet, dass** die Steuereinlagen (6) geschichtet und gegeneinander isoliert angeordnet sind.

6. Verbindungsmuffe nach einem der vorhergehenden Ansprüche, **dadurch gekennzeichnet, dass** die Steuereinlagen (6) elektrisch leitend sind und insbesondere rußhaltiges Papier und/oder Metall und/oder aus leitfähigen Kunststoff aufweisen.

7. Verbindungsmuffe nach einem der vorhergehenden Ansprüche, **dadurch gekennzeichnet, dass** die Steuereinlagen (6) eine Wanddicke von weniger als 500 µm, insbesondere von weniger als 200 µm, aufweisen.

8. Verbindungsmuffe nach einem der vorhergehenden Ansprüche, **dadurch gekennzeichnet, dass** eine in radialer Richtung innen liegende Steuereinlage (6) auf Hochspannungspotential liegt und/oder eine in radialer Richtung außen liegende Steuereinlage (6) geerdet ist.

9. Verbindungsmuffe nach einem der vorhergehenden Ansprüche, **dadurch gekennzeichnet, dass** die Steuereinlagen (6) derart ausgestaltet sind, dass bei transienten Vorgängen eine kapazitive Feldsteuerung und/oder bei stationären Vorgängen eine resistive Feldsteuerung erzeugbar ist.

10. Verbindungsmuffe nach einem der vorhergehenden Ansprüche, **dadurch gekennzeichnet, dass** die Länge der einzelnen Steuereinlagen (6) nach radial außen zunimmt und dem Abstand zwischen den Steckbereichen (8) entspricht.

11. Verbindungsmuffe nach einem der vorhergehenden Ansprüche, **dadurch gekennzeichnet, dass** mittels der Steuereinlagen (6), insbesondere über den Abstand der Steuereinlagen (6) zueinander, das elektrische Feld an den Grenzflächen (12) des Verbindungskörpers (5) einstellbar ist.

12. Verbindungsgarnitur **gekennzeichnet durch** eine Verbindungsmuffe (3) nach einem der vorhergehenden Ansprüche und zwei Kabelsteckteile (7) zum Einstecken und Verbinden eines Kabelendes (4) mit der Verbindungsmuffe (3).

13. Kabelsystem, insbesondere für Hochspannungsgleichspannungsanwendungen, **gekennzeichnet durch** zwei Kabel (17) und eine Verbindungsgarnitur (2) nach Anspruch 16.

14. Kabelsystem nach Anspruch 13, **dadurch gekennzeichnet, dass** die Kabel (17) unterschiedlichen Durchmesser aufweisen.

15. Verfahren zum Verbinden von zwei, einen unterschiedlichen Durchmesser aufweisenden Kabelenden (4), insbesondere von zwei Gleichspannungskabeln (17), mit einer Verbindungsmuffe (3) nach einem der Ansprüche 1 bis 15, bei welchem die Kabelsteckteile (7) an den Kabelenden (4) angeordnet werden und die Kabelsteckteile (7) in den Verbindungskörper (5) der Verbindungsmuffe (3) eingeführt und arretiert werden.
